# EUROPEAN PATENT APPLICATION

(11) **EP 3 418 862 A1**
(43) Date of publication of application: **26.12.2018**
(21) Application number: 18178468.7
(22) Date of filing: 19.06.2018
(51) Int. Cl.: G06F 3/01, G06F 3/033, A63F 13/25, A63F 13/285

(54) **DEVICE HAVING A PLURALITY OF SEGMENTS FOR OUTPUTTING A ROTATIONAL HAPTIC EFFECT**

(30) Priority: 22.06.2017 US 201715630285
(71) Applicant: Immersion Corporation, San Jose, CA 95134 (US)
(72) Inventor: RIHN, William, San Jose, CA California 95124 (US); GRANT, Danny, Laval, Québec H7M 2A1 (CA); ULLRICH, Christopher J., Ventura, CA California 93003 (US)
(74) Representative: Hofstetter, Schurack & Partner

(57) **Abstract**

A device, such as a handheld controller, having a plurality of segments for outputting a rotational haptic effect is disclosed. The handheld controller comprises a first segment, a second segment, a user input component, an actuator, and a control unit. The second segment is rotatably attached to the first segment. The user input component is disposed on the first segment or the second segment. The actuator is located within the first segment or the second segment, and is configured to generate relative rotation between the first segment and the second segment about a rotational axis, wherein at least a portion of the first segment and at least a portion of the second segment are aligned along the rotational axis. The control unit is configured to determine whether to generate a haptic effect, and, in response to such a determination, to activate the actuator to generate the relative rotation.

## Description

### FIELD OF THE INVENTION

The present invention is directed to a device having a plurality of segments for outputting a rotational haptic effect, and has application in gaming, user interfaces, mobile devices, wearable devices, and consumer electronics.

### BACKGROUND

Video games and video game systems have become even more popular due to the marketing toward, and resulting participation from, casual gamers. Controller devices (e.g., video game devices or controllers) may use visual and auditory cues to provide feedback to a user. In some interface devices, kinesthetic feedback (such as active and resistive force feedback) and/or tactile feedback (such as vibration, texture, and heat) is also provided to the user, more generally known collectively as "haptic feedback" or "haptic effects." Haptic feedback can provide cues that enhance and simplify the user interface. Specifically, vibration effects, or vibrotactile haptic effects, may be useful in providing cues to users of electronic devices to alert the user to specific events, or provide realistic feedback to create greater sensory immersion within a simulated or virtual environment. Other devices, such as wearable devices, automotive controls, remote controls, and other similar devices wherein a user interacts with a user input elements to cause an action also benefit from haptic feedback or haptic effects.

### SUMMARY

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

One aspect of the embodiments herein relate to a handheld controller that comprises a first segment, a second segment, a user input component, an actuator, and a control unit. The second segment is rotatably attached to the first segment. The user input component is disposed on the first segment or the second segment. The actuator is located within the first segment or the second segment, the actuator being configured to generate relative rotation between the first segment and the second segment about a rotational axis. The control unit is in communication with the actuator and configured to determine whether to generate a haptic effect, and, in response to a determination to generate the haptic effect, to activate the actuator to generate the relative rotation between the first segment and the second segment about the rotational axis.

In an embodiment, at least a portion of the first segment and at least a portion of the second segment are aligned along the rotational axis of the actuator, wherein the control unit is configured, in response to a determination to generate the haptic effect, to determine a degree of relative rotation between the first segment and the second segment, and to activate the actuator to cause the first segment and the second segment to rotate relative to each other by the determined degree of relative rotation, wherein the determined degree of relative rotation is a maximum amount of relative rotation between the first segment and the second segment.

In an embodiment, the control unit is configured to cause a segment of the first segment and the second segment to rotate in a first direction only once relative to the other of the first segment and the second segment in response to the determination to generate the haptic effect.

In an embodiment, the segment is rotated from a first position to a second position when the actuator is activated, and wherein the actuator is configured to return the segment from the second position to the first position by causing the segment to rotate in a second and opposite direction relative to the other of the first segment and the second segment by the determined degree of relative rotation.

In an embodiment, the control unit is configured to determine the degree of relative rotation based on at least one of: i) a grip pressure on the first segment or the second segment, ii) a material forming an exterior surface of the first segment or the second segment, and iii) a total number of segments of the handheld controller that are rotatable relative to each other.

In an embodiment, in response to the determination to generate the haptic effect, the control unit is further configured to determine a frequency of oscillation, and to cause the first segment and the second segment to rotate back and forth relative to each other at an amplitude that is the determined degree of relative rotation and at a frequency that is the determined frequency of oscillation.

In an embodiment, the handheld controller further includes a shaft longitudinally extending along the rotational axis of the actuator, and from the first segment to the second segment, wherein the actuator is rotatably attached to the shaft such that the actuator is rotatable relative to the shaft, or is fixedly attached to the shaft such that the actuator and the shaft rotate together, wherein the rotational axis is a longitudinally-extending central axis of the handheld controller.

In an embodiment, the actuator is a first actuator rotatably attached to the shaft and located within the first segment, the handheld controller further comprising a second actuator located within the second segment and rotatably attached to the shaft, and wherein the control unit, in response to the determination to generate the haptic effect, is configured to cause the first actuator to rotate the first segment in a first direction about the shaft, and to cause the second actuator to rotate the second segment in a second and opposite direction about the shaft.

In an embodiment, the handheld controller further comprises one or more additional segments that are each rotatably attached to an adjacent segment, and wherein the control unit is configured to determine which of the first, second, and one or more additional segments of the handheld controller to rotate relative to the first segment.

In an embodiment, each segment of the one or more additional segments of the handheld controller has an actuator disposed therein, and wherein each actuator is configured to rotate the respective segment about the longitudinally-extending central axis.

In an embodiment, the handheld controller further comprises one or more additional segments and one or more coupling devices, wherein each of the one or more coupling devices is configured, upon receiving a control signal from the control unit, to engage a respective pair of adjacent segments of the first, second and one or more additional segments such that the pair of adjacent segments rotate together.

In an embodiment, the second segment is disposed at a first end of the first segment, the handheld controller further comprising a third segment disposed at a second and opposite end of the first segment. In the embodiment, the actuator is a first actuator disposed within the first segment and is configured to rotate the second segment via a first shaft in a first direction about the central axis and relative to the first segment, and the handheld controller comprises a second actuator disposed in the first segment and configured to rotate the third segment via a second shaft in a second and opposite direction about the central axis and relative to the first segment.

In an embodiment, the handheld controller further includes a rotation sensor configured to detect relative rotation between the first segment and the second segment, wherein the control unit is configured to convert the detected relative rotation to a control input signal, wherein the handheld controller further comprises a communication unit that is configured to communicate the control input signal to a computer external to the handheld controller.

In an embodiment, the handheld controller is configured to communicate with a computer, and wherein the control unit of the handheld controller is configured to determine whether the computer is executing a defined application or a defined portion thereof, and is further configured to activate the actuator to cause the user input component to rotate to a defined position in response to a determination that the computer is executing the defined application or the defined portion thereof.

In an embodiment, the defined application is a game application, and the user input component is a button or a trigger configured to provide input signals for the game application.

In an embodiment, the first segment is associated in a storage device with a texture, and the control unit is configured to rotate the first segment relative to the second segment based on the texture.

In an embodiment, the first segment is associated in a storage device with a first texture and a second texture, the first texture being associated with a first direction of rotation, the second texture being associated with a second and opposite direction of rotation, and wherein the control unit is configured to determine whether to rotate the first segment relative to the second segment in the first direction or the second direction, and to rotate the first segment relative to the second segment based on the respective texture associated with the direction that is determined.

One aspect of the embodiments herein relate to a handheld controller that comprises a housing, a user input component, one or more haptic effect regions, one or more actuators, and a control unit. The housing has a side surface that is a graspable surface. The user input component is disposed on the housing. The one or more haptic effect regions are disposed on the side surface of the housing and are rotatable relative to a remaining portion of the side surface. The one or more actuators are disposed within the housing and configured to rotate the one or more haptic effect regions relative to the remaining portion of the side surface. The control unit is in communication with the one or more actuators and configured to determine whether to generate a haptic effect, and, in response to a determination to generate the haptic effect, to activate the one or more actuators to cause the one or more haptic effect regions to rotate.

In an embodiment, each haptic effect region of the one or more haptic effect regions is a circular region.

In an embodiment, the one or more haptic effect regions has a plurality of haptic effect regions, and wherein the one or more actuators has only a single actuator, and wherein the single actuator is configured to rotate the plurality of haptic effect regions.

In an embodiment, each haptic effect region of the plurality of haptic effect regions is coplanar with a remaining portion of the side surface.

In an embodiment, the control unit is configured to cause the plurality of haptic effect regions to rotate at a same rate, in a same direction, and by a same degree of rotation.

In an embodiment, the plurality of haptic effect regions share a single actuator.

In an embodiment, the plurality of haptic effect regions comprises at least three haptic effect regions that are co-linear.

Features, objects, and advantages of embodiments hereof will become apparent to those skilled in the art by reading the following detailed description where references will be made to the appended figures.

### BRIEF DESCRIPTION OF THE DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIGS. 1A and 1B are perspective views that depict various handheld controllers that each has at least two segments that are rotatable relative to each other to output a rotational haptic effect, according to an embodiment hereof.
FIG. 2A is a side view illustrating a handheld controller having at least two segments that are rotatable relative to each other to output a rotational haptic effect, according to an embodiment hereof.
FIG. 2B is a block diagram view of a handheld controller having at least two segments that are rotatable relative to each other to output a rotational haptic effect, according to an embodiment hereof.
FIG. 2C is a flow diagram of a method of generating a rotational haptic effect on a handheld controller having at least two segments that are rotatable relative to each other, according to an embodiment hereof.
FIGS. 3A and 3B are views depicting relative rotation between two segments of a handheld controller, according to an embodiment hereof.
FIGS. 4A and 4B are side views illustrating a handheld controller having at least two segments that are rotatable relative to each other to output a rotational haptic effect, according to an embodiment hereof.
FIGS. 5A and 5B are side views depicting a handheld controller having at least two segments that are rotatable relative to each other to output a rotational haptic effect, according to an embodiment hereof.
FIG. 6 is a side view illustrating a handheld controller having multiple segments that are rotatable relative to a first segment, according to an embodiment hereof.
FIG. 7 is a side view illustrating a handheld controller having multiple segments that are rotatable relative to a first segment, according to an embodiment hereof.
FIG. 8 is a side view of a handheld controller having two actuators disposed in a single segment, according to an embodiment hereof.
FIG. 9 is a perspective view depicting a handheld controller for two-handed use, where the handheld controller has two segments that are rotatable relative to each other to output a rotational haptic effect, according to an embodiment hereof.
FIG. 10 illustrates a handheld controller having segments that are rotatable along a first axis of rotation, and segments that are rotatable along a second axis of rotation, according to an embodiment hereof.
FIG. 11 is a view of a handheld controller having haptic effect regions disposed on a side surface thereof and rotatable relative to a remaining portion of the side surface, according to an embodiment hereof.
FIG. 12A illustrates a block diagram of a handheld controller having haptic effect regions disposed on a side surface thereof, according to an embodiment hereof.
FIG. 12B is a flow diagram of a method of generating a rotational haptic effect on a handheld controller having a plurality of haptic effect regions disposed on a side surface thereof, according to an embodiment hereof.
FIG. 13 illustrates a block diagram of a handheld controller having haptic effect regions disposed on a side surface thereof, according to an embodiment hereof.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Embodiments hereof relate to a haptic-enabled device, such as a handheld game console controller, that is configured to provide twist haptics (also referred to as rotational haptics) through relative rotation between at least a first segment and a second segment of the device. A handheld controller may output the twist haptics when, for example, the controller is grasped in a palm of a user's hand, such that both the first segment and the second segment contact the user's palm. To generate a haptic effect (e.g., a tactile haptic effect), the first segment and the second segment may be rotated relative to each other while the handheld controller is being held in the palm of the user's hand. In some cases, the first segment and/or the second segment may exert a stretching or pinching force on the palm of the user's hand during their rotation relative to each other. In some cases, the first segment and/or the second segment may rub against the palm of the user's hand during their rotation relative to each other. In an embodiment, the rotational haptic effect may be output only if skin contact, such as the skin of the user's hand, has been detected with the first segment and/or the second segment of the handheld controller. In an embodiment, the rotational haptic effect may be output regardless of whether the first segment and/or second segment of the handheld controller is in contact with the user's skin, or is instead in contact with an article of clothing, such as a glove.

The rotational haptic effects discussed herein may be used for a variety of purposes. For instance, the rotational haptic effects may be used on a handheld controller to provide tactile feedback on the palm of a user's hand, so as to convey texture of a surface in a virtual reality or other game being controlled through the handheld controller. In another instance, the rotational haptic effects may be used to inform a user of an event, such as the firing of a virtual weapon or the impact by a virtual baseball bat against a virtual ball, in a game being controlled through the handheld controller. In yet another instance, the rotational haptic effects may be used to represent real or virtual torques that are being applied to an avatar or to tools being manipulated by an avatar.

In an embodiment, rotational haptics in a handheld controller may be intended to be output while the handheld controller is being grasped by, e.g., a hand that is contacting both a first segment and a second segment thereof, where the two segments are rotatable relative to each other. This type of grasp may allow the relative rotation of the two segments to be felt in the user's hand, either directly or through a glove. In the embodiments herein, the relative rotation of a rotational haptic effect may involve both the first segment and the second segment of a handheld controller rotating relative to, e.g., a user's hand, or involve only one of the first and second segments rotating relative to the user's hand. In an embodiment, grip pressure from a hand grasping the handheld controller may affect whether both the first segment and the second segment thereof can rotate relative to the hand, or only one segment can rotate relative to the hand. For instance, if a user's hand has a loose grasp on the first segment and the second segment of the handheld controller such that grip pressure on those segments is low, both the first segment and the second segment may be able to rotate, in respective opposite directions, relative to the user's hand. The first segment may rotate in, e.g., a clockwise direction relative to a perspective of the user, and the second segment may rotate in, e.g., a counterclockwise direction relative to the perspective of the user. If the user's hand has a tight grasp on one of the first segment or the second segment of the handheld controller such that grip pressure on that segment is high, the segment being grasped may remain stationary relative to the user's hand (also referred to as being grounded). Grip pressure on the other segment, however, may be sufficiently low to allow the other segment to still rotate relative to the user's hand. As discussed below, there may be situations in which grip pressure is high enough on both the first segment and the second segment to prevent both segments from rotating relative to a user's hand. In an embodiment, the handheld controller may be configured to detect those situations and then forego outputting a rotational haptic effect, or reduce a magnitude of the rotational haptic effect.

In an embodiment, a rotational haptic effect may interact with a user's hand, or another part of the user's body, in a variety of ways. For instance, the rotational haptic effect from a handheld controller may pinch or stretch the palm of the user's hand or provide any other form of tension against the palm of the user's hand, particularly if the handheld controller is held sufficiently tightly such that a rotating segment thereof drags the skin along the direction of rotation. In another instance, a rotational haptic effect from a handheld controller may cause a rotating segment to brush against the palm of the user's hand, particularly if the handheld controller is held sufficiently loosely such that a rotating segment thereof is able to slip against the palm of the user's hand.

In an embodiment, a particular haptic effect may cause two segments of a handheld controller to rotate only once from an original position relative to each other. For instance, the two segments may rotate 40° relative to each other from an original position, and then stop or return to the original position. In another instance, the two segments may rotate back and forth relative to each other, such as rotate 20° relative to each other from an original position in a clockwise direction, return to the original position, rotate 20° relative to each other from the original position in a counterclockwise direction, return to the original position, and repeat this movement for a plurality of cycles. In an embodiment, movement of the segments of the handheld controller may be caused by a haptic command, such as from a game application executing on a game console, to generate a haptic effect. In this embodiment, movement that is caused by a first haptic command may be considered a first haptic effect, while movement from a subsequent haptic command may be considered to be a separate, second haptic effect. In an embodiment, movement of the segments of the handheld controller may be part of a haptic effect that is triggered by an event in an application. In this embodiment, movement that is triggered by a first event may be considered a first haptic effect, while movement triggered by a subsequent event may be considered to be a separate, second haptic effect.

In an embodiment, as discussed below in more detail, a segment of the handheld controller may be rotated from a first position (e.g., a default position, also referred to as a baseline position) at which a feature on the segment will be more difficult for a user to access, to a second position at which the feature on the segment will be easier for the user to access. Examples of the feature include a user input element (e.g., a joystick, a button, a trigger) and a textured region. For instance, a segment on which a user input element is disposed may be rotated from a first position where the user input element is harder to reach, to a second position where the user input element is easier to reach. For a joystick, for example, the second position may be a position at which the joystick faces toward the user, and is easiest to reach by a user's thumb. For a trigger, for example, the second position may be a position at which the trigger faces away from the user, and is easiest to reach by a user's index finger. In an embodiment, the first position and the second position may be defined relative to a user (e.g., facing toward or away from a user). In an embodiment, the first position and the second position may be defined relative to a particular feature of the handheld controller. For instance, if a particular feature on the handheld controller (e.g., a logo, power button or other button) is always expected to be facing toward a user when the user is holding the handheld controller, that feature may be used as a point of reference for other features, and the first position and the second position may be defined relative to that point of reference. In an embodiment, a default or baseline position that a particular feature (e.g., a button) always reverts back to may serve as a point of reference. Another position (e.g., a second position) may be defined relative to the baseline or default position (e.g., 90° or 180° clockwise from the baseline or default position).

As discussed above, one or more segments of the handheld controller may have a textured region, such as a region that has a sand-like texture, water-like texture, ridge-like texture, or any other texture. The texture may be a physical texture or a simulated texture. Physical texture may arise from a physical structure at a surface of the region (e.g., an irregular structure that creates a rough texture). Simulated texture may arise from, e.g., an electrostatic friction (ESF) electrode that is configured to interact with a user's hand to provide a tactile sensation. In an embodiment, the textured region may be rotated from a first position where the textured region is not in contact with the user, to a second position where the textured region is in contact with the user. For instance, the textured region may be located on a lower segment of a handheld controller. The first position may be a position at which the textured region would be expected to typically face away from a user's palm, and thus not be in contact with the user's palm. Thus, in the first position, the textured region is not felt by the user. The second position may be a position at which the textured region would typically be in contact with a user's palm. For instance, it may be a position that is 180° from the first position. Thus, in the second position, the textured region may be felt by the user.

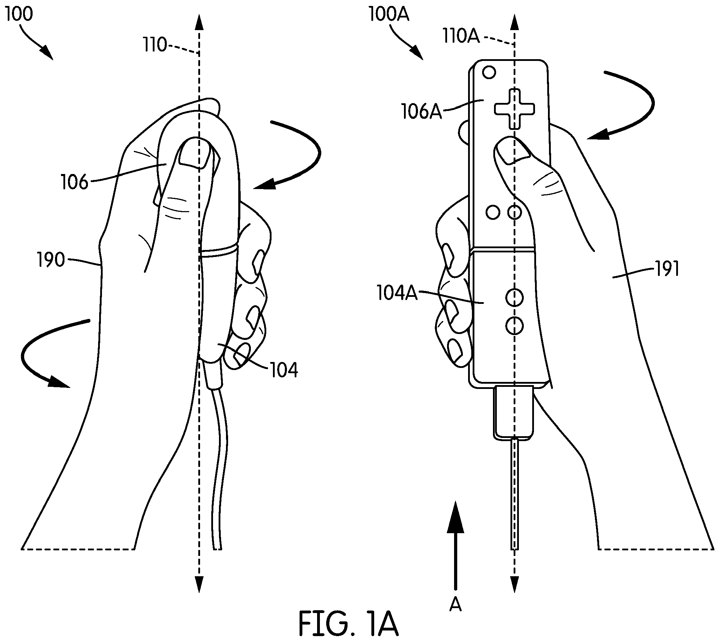

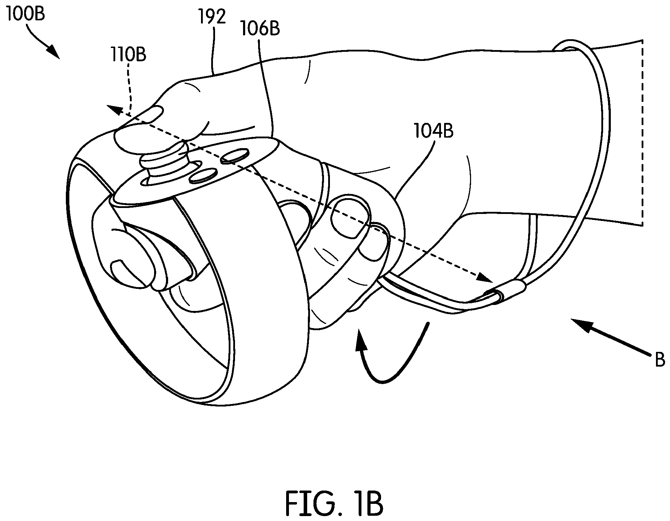

Haptic-enabled devices of the embodiments herein include peripheral devices such as a handheld controller and a wearable device. FIGS. 1A and 1B illustrate three handheld controllers 100, 100A, and 100B, according to embodiments herein. The handheld controllers 100, 100A, and 100B may be game controllers (e.g., for a virtual reality (VR) or augmented reality (AR) game), may be device controllers (e.g., for a remote-controlled toy vehicle), may be any other type of handheld controller, or any combination thereof. Each of the handheld controllers 100, 100A, and 100B may have at least two segments that are rotatable relative to each other about a rotational axis, where each segment has at least a portion that is aligned along the rotational axis. In FIG. 1A, the handheld controller 100 has a first segment 104 and a second segment 106 that are rotatable relative to each other about a rotational axis 110, and the two segments 104, 106 are aligned along the rotational axis 110. Similarly, the handheld controller 100A has a first segment 104A and a second segment 106A that are rotatable relative to each other about a rotational axis 110A, and the two segments 104A, 106A are aligned along the rotational axis 110A. In FIG. 1B, the handheld controller 110B has a first segment 104B and a second segment 106B that are rotatable relative to each other about a rotational axis 110B. The first segment 104B may be entirely aligned along the rotational axis 110B, while at least a portion of the second segment 106B is aligned along the rotational axis 110B.

In an embodiment, a rotational axis (e.g., 110, 110A, 110B) may be defined by an actuator (e.g., a motor, such as an eccentric rotating mass (ERM) motor) configured to output rotational actuation. For instance, if the motor has a rotor through which rotation is output, the rotational axis may be a longitudinally-extending central axis of the rotor, such that the axis extends through a center of the rotor. The longitudinally-extending central axis may be perpendicular to a radial axis of the rotor. In an embodiment, the rotational axis may further extend through a central portion of a handheld controller, in which case it may be referred to as a longitudinally-extending central axis of the handheld controller. For instance, rotational axis 110 may be a longitudinally-extending central axis of the handheld controller 100, by extending through a central portion of segments 104, 106 of the handheld controller 100. Rotational axis 110A may be a longitudinally-extending central axis of the handheld controller 100A, by extending through a central portion of segments 104A, 106A of handheld controller 100A. In an embodiment, a handheld controller may be symmetrical (e.g., rotationally symmetrical) about its longitudinally-extending central axis. In an embodiment, a handheld controller is asymmetrical (e.g., rotationally asymmetrical) about its longitudinally-extending central axis. In an embodiment, a longitudinally-extending central axis of an actuator (e.g., of a rotor) does not extend through a central portion of the handheld controller.

As discussed above, each of the handheld controllers 100, 100A, and 100B may have at least two segments that are rotatable relative to each other. The relative rotation may involve only one of the segments rotating relative to a user, or both segments rotating in opposite directions relative to the user. FIG. 1A illustrates a situation in which segment 104 of the handheld controller 100 rotates in a clockwise direction relative to a user, and more specifically relative to a perspective of the user that is in the direction A, and in which segment 106 of the handheld controller 100 rotates in a counterclockwise direction relative to the perspective of the user in the direction A. The handheld controller may be held loosely enough by a hand 190 of a user so as to permit rotation of both segment 104 and segment 106 relative to the user, and more specifically relative to the hand 190. FIG. 1A further illustrates a situation in which segment 104A of handheld controller 100A is held stationary relative to a user, and more specifically relative to a hand 191 of the user (i.e., grounded by the hand 191), while segment 106B rotates in a counterclockwise direction relative to a perspective of the user in the direction A.

FIG. 1B illustrates a situation in which segment 106B of the handheld controller 100B is held stationary relative to a hand 192 of a user (i.e., is grounded by hand 192), and in which segment 104B rotates counterclockwise relative to a perspective of the user in the direction B. In an embodiment, segment 104A of handheld controller 100A (in FIG. 1A) and segment 106B of handheld controller 100B (IN FIG. 1B) may be held stationary because a respective hand 191, 192 of a user is grasping the segment 104A or 106B with sufficient grip pressure to produce a level of static friction that is sufficiently high to prevent segment 104A and segment 106B from rotating relative to a respective hand.

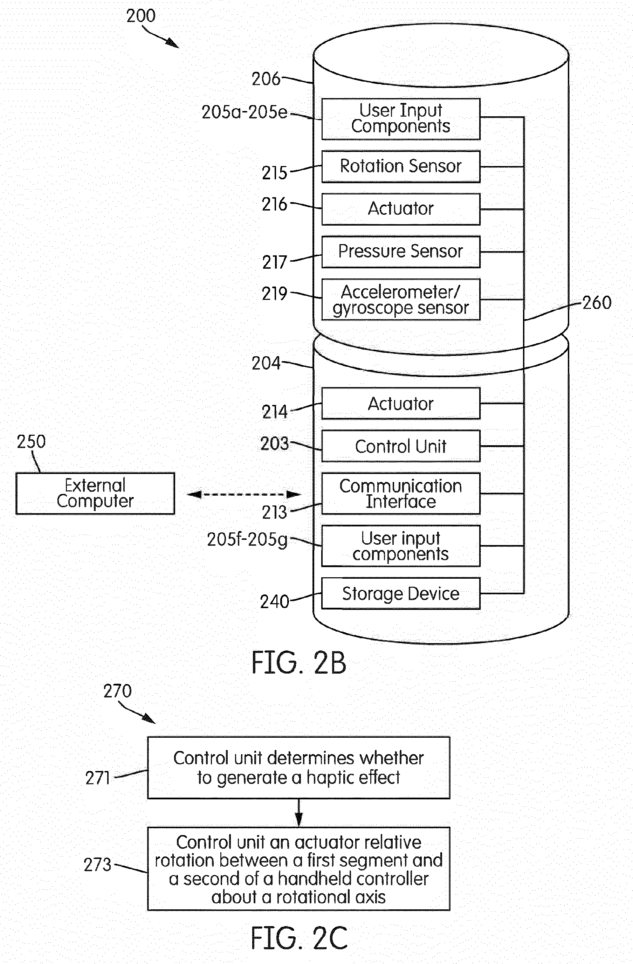

In an embodiment, a handheld controller may output a twist haptic effect by causing relative rotation of at least two segments of the handheld controller. The sensation which is imparted by the twist haptic effect may depend on a level of friction between a rotating segment and a hand holding the segment. When there is a sufficiently high level of friction between an outer surface of a rotating segment and a surface of a hand holding the segment, the rotating segment may stretch or pinch the hand holding as the segment rotates, which may impart a sensation of the skin being stretched or pinched. For instance, rotation of segment 104 in a clockwise direction may stretch skin on a first portion of the palm of hand 190 in a leftward direction, and rotation of segment 106 may stretch skin on a second portion of the palm of hand 190 in a rightward direction. The first portion of the palm may be a part that is in contact with the first segment 104, directly or indirectly (e.g., behind a glove), and the second portion of the palm may be a part that is directly or indirectly in contact with the second segment 106. When there is a sufficiently low level of friction between an outer surface of a rotating segment and a surface of a hand holding the segment, the rotating segment may slip against the surface of the hand, which may impart a sensation of the segment brushing against the hand. For instance, segment 104 may brush against the first portion of the palm of hand 190 in a leftward direction as the segment 104 rotates clockwise, and segment 106 may brush against the second portion of the palm in a rightward direction as the segment 106 rotates counterclockwise. In an embodiment, whether and/or how much a particular segment rotates may be used to determine a level of friction between the segment and the surface of the hand holding the segment. For instance, if a haptic effect is commanded for a particular segment, but the segment does not rotate or rotates by only a small amount relative to the user and/or to another segment of the handheld controller, this phenomenon may be used to estimate an amount of grip strength on the segment. The determination of grip strength may be useful in various situations, such as when the handheld controller represents a sword or other weapon in a game. In an embodiment, a rotation sensor (e.g., rotation sensor 215 in FIG. 2B) may be used to determine an amount and/or rate of rotation of a particular segment relative to another segment of the handheld controller (e.g., relative to a shaft that is rotationally fixed to the other segment). The rotation sensor may encode the measurement into a digital signal that may be used to determine the grip strength on the particular segment.

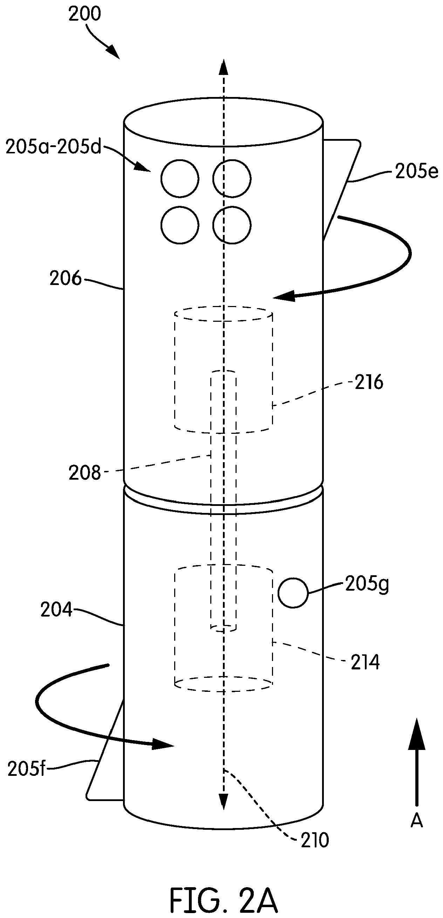

FIGS. 2A and 2B illustrate various components of a handheld controller 200, according to embodiments hereof. The handheld controller 200 may have a body that is split into a first segment 204 and a second segment 206 rotatably attached to the first segment 204. The rotational attachment may be, e.g., any type of rotational joint (e.g., revolute joint, cylindrical joint, a ball joint, a universal joint, a 1R rotation joint, a 2R rotation joint). In an embodiment, the first segment 204 and the second segment 206 may be separated by a slight gap to allow them to rotate relative to each other. In an embodiment, the first segment 204 and the second segment 206 may be separated by a layer of material that has sufficiently low friction to allow them to rotate relative to each other. In an embodiment, the first segment 204 and the second segment 206 may be separated by one or more sets of bearings to allow them to rotate relative to each other. The body of the handheld controller 200 may be rigid (e.g., a rigid shell), or may be flexible.

In an embodiment, the handheld controller 200 may further comprise a first actuator 214 (e.g., a first motor) located within the first segment 204, and comprise a second actuator 216 (e.g., a second motor) located within the second segment 206. Each actuator of the first actuator 214 and the second actuator 216 may be configured to generate relative rotation between the first segment 204 and the second segment 206 about a rotational axis 210. In an embodiment, the rotational axis 210 may be an axis along which the first segment 204 and the second segment 206 are split. In an embodiment, the rotational axis 210 may be a longitudinally-extending central axis of actuators 214, 216, about which the actuators 214, 216 rotate. In FIG. 2A, the actuators 214, 216 may share the same rotational axis 210. In an embodiment, the rotational axis 210 may be a longitudinally-extending central axis of the first segment 204 and the second segment 206, and the segments 204, 206 may be aligned along the longitudinally-extending central axis.

In FIG. 2A, the handheld controller 200 may further comprise a shaft 208 which extends along the rotational axis 210, from the first segment 204 to the second segment 206. The first actuator 214 and the second actuator 216 may be attached to the shaft 208. In an embodiment, the first actuator 214 may be rotatably attached to the shaft 208 (so as to be rotatable relative to the shaft 208), and fixedly attached to a body of the first segment 204. Further, the second actuator 216 may be rotatably attached to the shaft 208, and fixedly attached to a body of the second segment 206. In this configuration, when the first actuator 214 is activated, it may rotate relative to the shaft 208 and thus cause the first segment 204 to also rotate relative to the shaft 208. When the second actuator 216 is activated, it may rotate relative to the shaft 208 and thus cause the second segment 206 to also rotate relative to the shaft. FIG. 2A illustrates a situation in which the first actuator 214 is rotating segment 204 in a clockwise direction about the shaft 208, as observed in the direction A, and in which the second actuator 216 is rotating segment 206 in a counterclockwise direction about the shaft 208, as observed in the direction A.

FIG. 2A further illustrates a plurality of user input components 205a-205f that are disposed on the first segment 204 or the second segment 206. The user input components 205a-205f include a first set of buttons 205a-205d and a trigger 205e that are disposed on the first segment 204, and include a button 205g and a trigger 205f disposed on the second segment 206. In an embodiment, the buttons 205a-205d and 205g may include one or more mechanical buttons and/or one or more capacitive touch-sensing buttons.

FIG. 2B illustrates a block diagram of the handheld controller 200. As the block diagram of FIG. 2B illustrates, the handheld controller 200 includes the user input components 205a-205e disposed on the second segment 206, and includes the user input components 205f, 205g disposed on the first segment 204. The controller 200 further includes the first actuator 214 disposed within the first segment 204, and the second actuator 216 disposed within the second segment 206. Additionally, the handheld controller 200 further comprises a control unit 203, a communication interface 213, a rotation sensor 215, a pressure sensors 217, an accelerometer/gyroscope sensor 209, and a storage device 240, which may be disposed in the first segment 204, the second segment 206, in another segment (if any) of the handheld controller 200, or any combination thereof.

In an embodiment, the communication interface 213 may be configured to communicate with an external computer 250. For instance, the external computer 250 may be a game console or desktop computer configured to execute a game application. The handheld controller 200 may be a game controller used to provide control input, such as via user input components 205a-205g, to the game application. In an embodiment, the user input components 205a-205g and the accelerometer/gyroscope sensor 219 may be used to generate control input signals to control the game application. In an embodiment, the pressure sensor 217 and/or the rotation sensor 215 may also be used to generate control input signals to control the game application. The communication interface 213 may relay control input signals from the user input components 205a-205g, accelerometer/gyroscope sensor 219, pressure sensor 217, and/or rotation sensor 215 to the external computer 250, via a wireless or wired connection.

In an embodiment, the control unit 203 may be configured to process signals from the user input components 205a-205g and from the rotation sensor 215, and/or to control the actuators 214, 216 and the communication interface 213. The control unit 203 may communicate with those components using a wired connection 260 that extends between the segments 204 and 206, as illustrated in FIG. 2B, or using a wireless connection. In an embodiment, the wired connection 260 may pass through the shaft 208 of FIG. 2A. The control unit 203, as well as the other components illustrated in FIG. 2B, may comprise one or more processors, which may include a general purpose processor that executes non-transitory computer-readable instructions from a storage device on the handheld controller 200, or a special purpose processor such as a field programmable gate array (FPGA) chip. In an embodiment, the processor may be configured to convert a value, such as a determined degree of rotation, to a voltage to be applied to one or more actuators to, e.g., recreate a programmer or haptic designer's intentions.

In an embodiment, the storage device 240 may store device profile as firmware. The device profile may store information on, for example, a material that forms an exterior surface of segments 204, 206, how many segments form the handheld controller 200, or any other information on the handheld controller 200. In an embodiment, as discussed below in more detail, the storage device 240 may store a texture profile.

In an embodiment, the rotation sensor 215 may be configured to detect relative rotation between the first segment 204 and the second segment 206, including the presence of relative rotation or a parameter of the relative rotation, such as a direction of relative rotation, a speed of relative rotation, and/or a degree of relative rotation. The rotation sensor 215 may be a torque sensor, a potentiometer, a tachometer, or any other sensor configured to sense the presence of relative rotation and/or one of the parameters of the relative rotation between the two segments 204, 206. In an embodiment, a user may rotate segments 204, 206 relative to each other as a form of input. The input may be a binary value which simply indicates whether there is relative rotation, or may have more values that correspond to different directions of rotation, different speeds of rotation, and/or different degrees of rotation. The rotation sensor 215 may be configured to detect the relative rotation caused by the user, and report to the control unit 203 raw sensor data that indicates the presence of relative rotation or a parameter of the relative rotation. The control unit 203 may be configured to cause the communication interface 213 to communicate the raw sensor data to the external computer, or may be configured to first convert the raw sensor data to a format (e.g., to a format of a control input signal) that the external computer 250 recognizes, and cause the communication interface 213 to communicate the formatted sensor data to the external computer.

In an embodiment, pressure sensors 217 may comprise one or more sensors that are configured to measure grip pressure. The grip pressure refers to how tightly or loosely the handheld controller 200 is being gripped. In an embodiment, the pressure sensors 217 may comprise at least one grip pressure sensor that is disposed on segment 204, and another grip pressure sensor that is disposed on segment 206. The two grip pressure sensors may measure a degree of grip pressure on the segment 204 and the segment 206, respectively. Measurements of the grip pressure may be communicated to the control unit 203 as raw sensor data.

In an embodiment, the control unit 203 may be configured to cause a rotational haptic effect to be output, such as with the example method 270 illustrated in FIG. 2C. In step 271 of FIG. 2C, the control unit 203, which is in communication with the actuators 214 and 216, may determine whether to generate a haptic effect. In step 273, in response to a determination to generate a haptic effect, the control unit 203 activates the actuator 214 and/or the actuator 216 to generate relative rotation between the first segment 204 and the second segment 206 about the rotational axis 210. The relative rotation may involve only one actuator of actuators 214, 216 being activated, or may involve both actuators 214, 216 being activated in respective opposite directions. In an embodiment, the control unit may activate an actuator (e.g., actuator 214) by outputting a driving signal that comprises a pulse having a defined duration and/or amplitude to the actuator. In this embodiment, the amount (i.e., degree) of rotation of a segment (e.g., 204 or 206) of the handheld controller caused by the actuator may vary depending on a level of friction between the segment and a hand grasping the segment. The level of friction may depend on, for example, a grip pressure, skin moisture, whether the hand is wearing a glove and a material of the glove, or some other factor.

In an embodiment, the control unit 203 may be configured to use measurements from the pressure sensors 217 to estimate an amount of friction between the segments 204, 206 and a hand grasping the segments 204, 206, before outputting a driving signal pulse. The control unit 203 may then set the duration and/or amplitude of the driving signal pulse based on the estimated amount of friction, and then output the driving signal pulse, which may be the only pulse in the driving signal. In an embodiment, the control unit 203 may monitor relative rotation between the segments 204, 206 as it occurs to determine an amount of relative rotation that has occurred. The control unit 203 may perform this monitoring by using, e.g., rotation sensor 215. If the determined amount of rotation has not reached a desired amount of rotation, the control unit 203 may output one or more additional driving signal pulses to cause the two segments 204, 206 to reach the desired degree of relative rotation. In an embodiment, the game application and/or the haptic control unit 203 may be configured to execute a haptic engine that adjusts or otherwise controls a rotational haptic effect based on factors of the in-game environment.

In an embodiment, the control unit 203 is configured, in response to a determination to generate a haptic effect, to determine a desired degree of relative rotation between the first segment 204 and the second segment 206. In an embodiment, the desired degree of relative rotation may correspond with, for example, a value associated with an event in an application that triggers a haptic effect. For instance, the application may be a game application executing on a game console in communication with the handheld controller 200, where the game application is being controlled by the handheld controller 200. Example events that trigger a haptic effect may include movement of an object in the game application, collision of the object in the game application, or an explosion in the game application. In an embodiment, the degree of rotation may be based on, e.g., a speed of the movement, an intensity of the collision, or an intensity of the rotation. In an embodiment, the degree of rotation may be proportional to a state of an object or an event in the application. For instance, an application may create a virtual environment in which a user can interact with a virtual spring or spring-like object, by pulling or pushing the virtual spring, in the virtual environment, past an equilibrium position of the spring. In response to this interaction, the handheld controller 200 may output a rotational haptic effect, and the degree of rotation of the haptic effect may be proportional to an amount of compression or stretching of the virtual spring or spring-like object in the virtual environment. In an embodiment, a direction of rotation may be based on an event in the application. For instance, an application programmer may program the application to trigger the segment 204 to rotate relative to the segment 206 in a clockwise direction in response to a first event in the application, and to trigger the segment 204 to rotate relative to the segment 206 in a counterclockwise direction in response to a second event in the application.

In an embodiment, the handheld controller 200 may be configured to communicate with an external computer 250, and the control unit 203 may be configured, in response to the external computer 250 executing a defined application, or in response to the external computer 250 executing a defined portion of the defined application, activate an actuator (e.g., 214) to rotate one of the segments (e.g., segment 204/206) about the rotational axis 210. The control unit 203 may activate the actuator to cause a user input component to rotate to a defined position in response to the determination that the defined application or the defined portion of the application is being executed on computer 250. For instance, the defined application or defined portion thereof may be an application or a portion that involves interaction with a joystick, button, or other user input component of a handheld controller. Thus, when the defined application or portion thereof is being executed, the segment 204/206 may be rotated in order to bring a user input component thereon (e.g., trigger 205e or 205f) to a defined position at which it can be more easily manipulated by a user. For instance, the defined position for a button (e.g., button 205a) may be a position in which the button is easily reachable by a user's thumb, and the defined position for a trigger (e.g., trigger 205e) may be a position in which the trigger is easily reachable by the user's index finger. In an embodiment, the defined portion of the defined application may be, e.g., a portion of a game application that involves aiming a weapon or flying a vehicle, which may be performed with input signals from the trigger. In an embodiment, the defined position may be relative to a baseline position. For instance, the defined position for the button 205a on segment 206 may be defined as 90° counterclockwise from a baseline position. In an embodiment, the control unit 203 may return a user input component to its baseline position after the defined application or the defined portion thereof has finished executing. In an embodiment, the actuator (e.g., 214) is configured to rotate the segment and the user input element thereon between a first position and a second position. The first position may be a position at which the user input element is more easily accessible by the user, while the second position may be a position that is 180 degrees away from the first position. The control unit may be configured to determine whether the user input component is needed to interact with the defined application or the defined portion thereof. The control unit may cause the actuator to rotate the user input component to the first position in response to a determination that the user input component is needed for the interaction, and to rotate the user input component to the second position in response to a determination that the user input component is not needed for the interaction.

As discussed above, one or more segments (e.g., segment 204) may have a textured region, such as a 3 cm x 3 cm region having a rough texture. In an embodiment, when the segment 204 is in the baseline position, the textured region is not felt by a hand grasping the handheld controller 200. In an embodiment, the control unit 203 may rotate the segment 204 from the baseline position to a defined position (e.g., 180° counterclockwise from the baseline position). In the defined position, the textured region may be felt by the hand grasping the handheld controller 200.

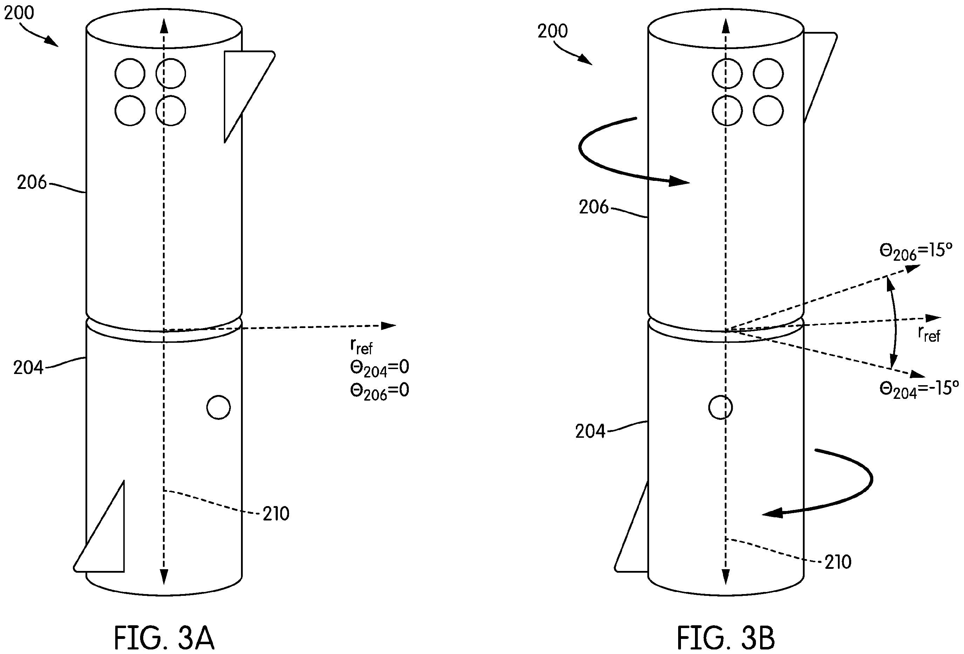

Relative rotation between the first segment 204 and the second segment 206 is depicted in FIGS. 3A and 3B. FIGS. 3A and 3B illustrate a vector r_{ref} that serves as a reference vector from which an angle of rotation is measured. In the embodiment of FIGS. 3A and 3B, the degree of relative rotation between segments 204 and 206 may be denoted θ_{Relative}. θ_{Relative} may be a difference between θ₂₀₄ and θ₂₀₆, wherein θ₂₀₄ is a degree of rotation of segment 204 relative to r_{ref} in a first direction, and θ₂₀₆ is a degree of rotation of segment 206 relative to r_{ref} in a second and opposite direction. In FIG. 3A, θ₂₀₄, and θ₂₀₆ may both be zero. In FIG. 3B, θ₂₀₄ may have a value of e.g., 15 degrees after segment 204 rotates 15 degrees in a first direction (e.g., clockwise) relative to r_{ref}. Further, in FIG. 3B, θ₂₀₆ may have a value of, e.g., -15 degrees after segment 206 rotates by 15 degrees in a second and opposite direction (e.g., counterclockwise) relative to r_{ref}. As a result, θ_{Relative} = θ₂₀₄ - θ₂₀₆ = 15 degrees - (-15 degrees) = 30 degrees. The relative rotation of segments 204 and 206 depicted in FIG. 3B may be considered a first direction of relative rotation. If the segments 204 and 206 reversed their directions of rotation, such that segment 204 rotated in a counterclockwise direction and segment 206 rotated in a clockwise rotation, the relative rotation of segments 204 and 206 may be considered to have a second and opposite direction, and θ_{Relative} may have a value of 30 degrees (i.e., -15 degrees - 15 degrees). If, in an embodiment, only a first segment (e.g., segment 204) rotates relative to r_{ref} while the other segments (e.g., segment 206) remains stationary relative to r_{ref}, the direction of relative rotation may be the same as the direction of rotation of the first segment. In an embodiment, θ_{Relative} may be a maximum amount or degree of relative rotation between the first segment 204 and the second segment 206 for a first direction of relative rotation and/or for a second direction of relative rotation. The angles θ₂₀₄ and θ₂₀₆ may differ, or may be the same. In an embodiment, the control unit 203 may further be configured to determine the direction of relative rotation.

In an embodiment, the control unit 203 may be configured to cause a segment of the first segment 204 and the second segment 206 to rotate in a first direction, relative to the other of the first segment 204 and the second segment 206, only once in response to a determination to generate a twist haptic effect. For instance, if an application on a game console communicates a haptic command to the control unit 203 to generate a haptic effect, the control unit 203 may cause segment 204 to rotate counterclockwise relative to segment 206, by a calculated maximum of 30 degrees, as illustrated in FIG. 3B, only once. As discussed above, this may involve only segment 204 rotating relative to a user, or segments 204 and 206 rotating in respective opposite directions relative to the user. After segment 204 has rotated by 30 degrees relative to segment 206 in a counterclockwise direction, the two segments may stop until the control unit 203 receives a subsequent haptic command from the application, or may return to a position before the relative rotation (e.g., to an original position). The segments may return to the position before the relative rotation by having segment 204 rotate in a clockwise direction by 30 degrees relative to segment 206. More generally speaking, the position of segment 204 before the relative rotation may be a first position (e.g., r_{ref}), and the relative rotation may rotate the segment 204 in a first direction from the first position to a second position. After the relative rotation in the first direction, the segment 204 may stop, or may rotate in a second and opposite direction to return to the first position. The rotation in the second and opposite direction may be considered part of the haptic effect, or may be considered a separate action that resets the segment 204 to the first position. In an embodiment, an actuator (e.g., actuator 214) or the control unit 203 may automatically return the segment 204 to the first position. This functionality may be implemented electronically or mechanically. In the electronic implementation, the actuator or control unit 203 may be programmed to electronically record an amount by which a segment (e.g., 204 or 206) has rotated away from the first position (e.g., 30 degrees away from r_{ref}), and may be configured to automatically rotate in an opposite direction by the same amount to return the segment to the first position. In the mechanical implementation, the handheld controller 200 may comprise a mechanical biasing component (e.g., a torsion spring) attached to the first segment 204 and the second segment 206. The mechanical biasing component may have an equilibrium position corresponding to the first segment 204 being at the first position (e.g., r_{ref}). When the actuator (e.g., 214) is activated, it may rotate the segment 204 away from the equilibrium position. When the actuator is deactivated, the mechanical biasing component may automatically return the first segment 204 to the first position.

In an alternative embodiment, rather than rotate a segment in a particular direction only once, the control unit 203 may be configured, in response to a determination to generate a haptic effect, to cause the first segment 204 and the second segment 206 to rotate back and forth relative to each other for several cycles. The cycles may have an amplitude and frequency of oscillation that is determined by the control unit 203. For instance, with reference to FIG. 3B, the 30 degrees of relative rotation determined by the control unit 203 may be the amplitude for each cycle, and the frequency may be, e.g., 1 Hz. In this instance, for each cycle of the relative rotation, the first segment 204 may rotate from 0 degrees to 15 degrees, reverse direction to rotate to -15 degrees, and then rotate back to 0 degrees in 1 second, which is a period of each cycle (i.e., an inverse of the frequency). Similarly, the second segment 204 may rotate from 0 degrees to -15 degrees, reverse direction to rotate to 15 degrees, and then rotate back to 0 degrees in 1 second.

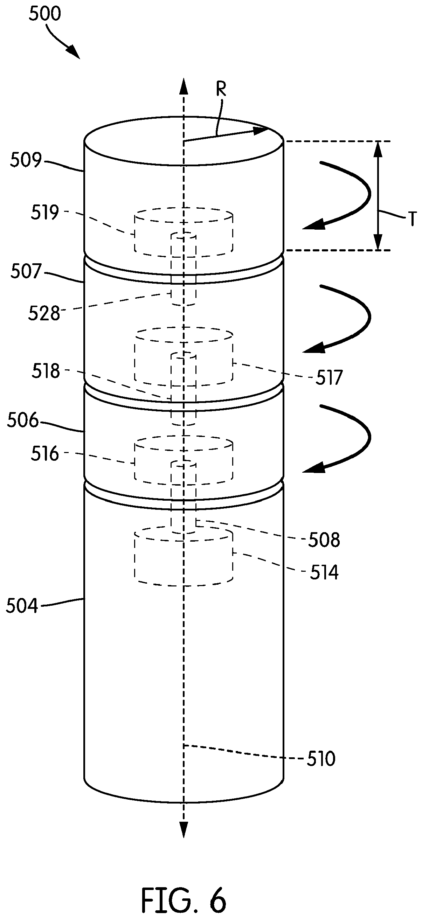

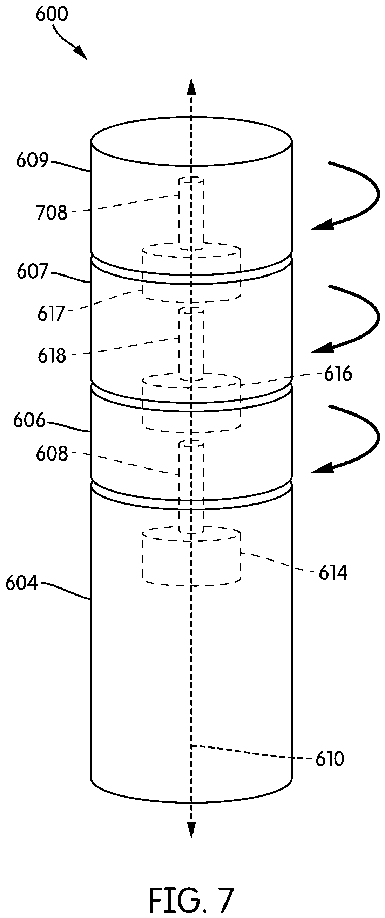

In an embodiment, the control unit 203 may be configured to determine the degree of relative rotation based on at least one of: i) a grip pressure on the first segment 204 or the second segment 206, ii) a material forming an exterior surface of the first segment 204 or the second segment 206, and iii) a total number of segments of the handheld controller that are rotatable relative to each other. Factors i) and ii) may affect an amount of friction between the first segment 204/second segment 206 and a hand or other body part that is in contact with the respective segment. For instance, an increased grip pressure from a hand grasping the handheld controller may correspond with a higher amount of friction, and certain materials (e.g., rubber) may also correspond with a higher amount of friction. As this friction increases, an actuator may need to use more power to achieve a determined degree of relative rotation between the first segment 204 and the second segment 206, such as by needing a driving signal with a higher amplitude or a longer duration or duty cycle. Thus, to be energy efficient, when the grip pressure or a coefficient of friction of the material of the first segment 204 or second segment 206 is higher than a threshold amount of pressure or threshold coefficient of friction, the control unit 203 may be configured to determine a degree of relative rotation that is less than a threshold degree of relative rotation. The threshold amount of pressure, threshold coefficient of friction, and the threshold degree of relative rotation may be defined values stored in the control unit 203. Factor iii) may relate to a handheld controller that has a first segment and multiple segments that are rotatable relative to the first segment, as illustrated in FIGS. 6 and 7, which are discussed in more detail later in the disclosure. In an embodiment, a control unit (e.g., control unit 203) may be configured to decrease the determined degree of relative rotation for respective handheld controllers with increasing total number of segments that are rotatable relative to each other. In an embodiment, the control unit may be configured to determine a degree of rotation based on a position of the handheld controller relative to a user.

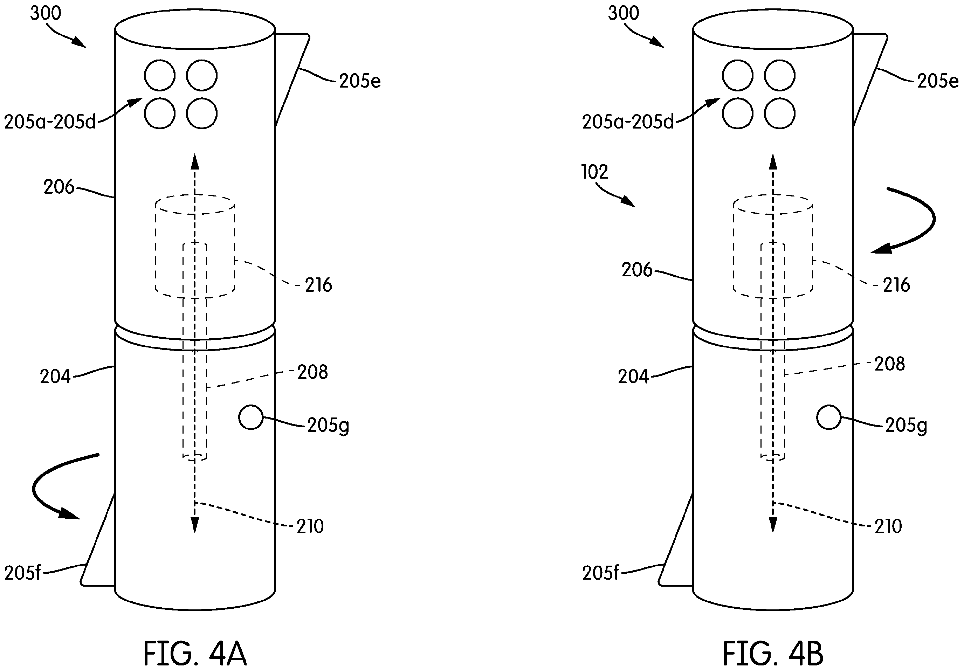

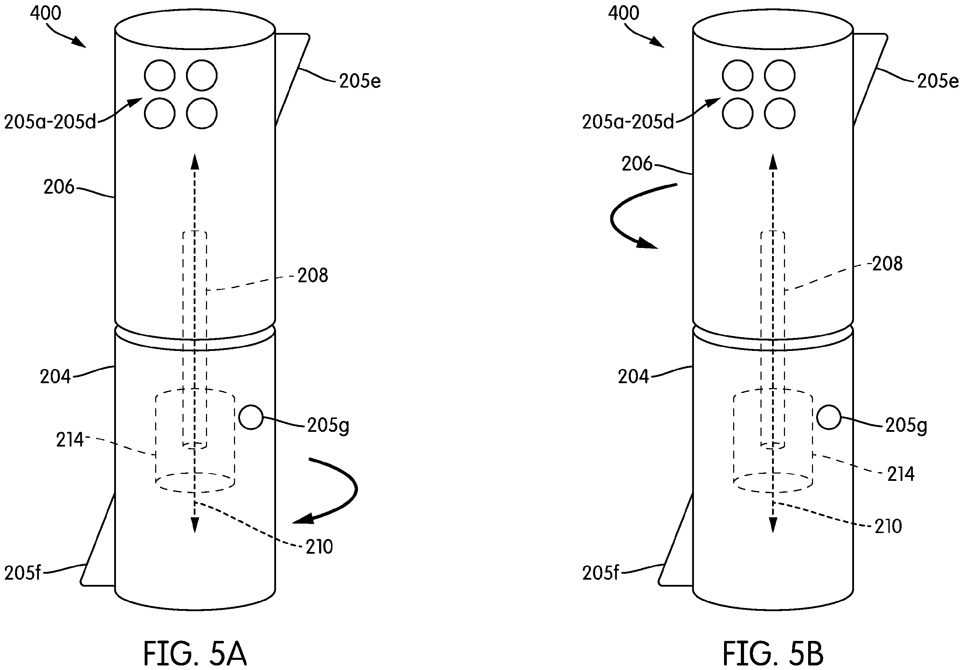

In an embodiment, the handheld controller 200 in FIGS. 2A and 2B includes two actuators, including an actuator 214 located within the first segment 204, and an actuator 216 located within the second segment 206. In an embodiment, a handheld controller may include only one actuator. For instance, FIGS. 4A and 4B illustrate a handheld controller 300 having only one actuator 216 located within a second segment 206 of the handheld controller 300, while FIGS. 5A and 5B illustrate a handheld controller 400 having only one actuator 214 located within a first segment 204 of the handheld controller.

In an embodiment, with reference to FIGS. 4A and 5A, the handheld controllers 300, 400 each comprises a shaft 208 extending between segments 204 and 206. Actuator 214/216 may be rotatably attached to the shaft 208, so as to be able to rotate relative to the shaft 208. For instance, with reference to FIG. 4A, the actuator 216 may be rotatably attached to the shaft 208, and fixedly attached to a body of the segment 206. Further, the shaft 208 may be fixedly attached to a body of the segment 204. When actuator 216 is activated, the actuator 216 and the segment 206 together rotate relative to the segment 204. With reference to FIG. 5A, the actuator 214 may be rotatably attached to the shaft 208 and fixedly attached to the segment 204 (e.g., to a body of the segment 204). Further, the shaft 208 may be fixedly attached to the segment 206. When actuator 214 is activated, the actuator 214 and the segment 204 together rotate relative to the segment 204.

In another embodiment, with reference to FIGS. 4A and 5A, the actuator 214/216 may be fixedly attached to its respective segment 204/206, so that the actuator 214/216 and its respective segment 204/206 rotate together. For instance, with reference to FIG. 4A, the actuator 216 may be fixedly attached to the segment 206, and rotatably attached to a shaft 208 that extends between segments 204 and 206. Shaft 208 may be fixedly attached to segment 204. When actuator 216 is activated, the actuator 216 rotates the segment 206 relative to the segment 204. With reference to FIG. 5A, the actuator 214 may be fixedly attached to the segment 204 and rotatably attached to the shaft 208. The shaft 208 may be fixedly attached to the segment 206. When actuator 214 is activated, the actuator 214 rotates segment 204 relative to the segment 206.

In the embodiment illustrated in FIGS. 4A, 4B, 5A, and 5B, how tightly a user grasps segment 204 or 206 may affect which segment rotates relative to the user. For instance, if a user grasps segment 206 tightly and grasps segment 204 loosely, segment 206 may remain stationary (i.e., grounded) while segment 204 rotates relative to the user, as illustrated in FIGS. 4A and 5A. Segment 206 may be referred to as a base segment in that instance. If a user grasps segment 204 tightly and segment 206 loosely, segment 204 may remain stationary (i.e., grounded) while segment 206 rotates relative to the user, as illustrated in FIGS. 4B and 5B. Segment 204 may be referred to as a base segment in that instance. If the user grasps both segments 204, 206 sufficiently loosely, both segments 204, 206 may be able to rotate relative to the user, in opposite directions. In that situation, the respective degrees of rotation or the rates of rotation of segments 204, 206 relative to the user may be the same, or may be different.

In another embodiment, actuator 214 and/or 216 may be used as a rotational brake that can resist relative rotation between segments 204 and 206. For instance, control unit 203 may cause actuator 214 and/or 216 to be electrically shorted between a positive terminal and a negative terminal. The electrical shorting may be performed by, e.g., closing a switch located between the positive terminal and negative terminal. Thus, a braking mode may be switchably activated and deactivated. When a user is attempting to manually rotate one segment (e.g., segment 206) relative to another segment (e.g., segment 204), the control unit 203 may have the option of activating the braking mode for, e.g., the actuator 214 in the segment 204. When the braking mode is activated for the actuator 214, it may resist a user's attempt to manually rotate the segment 206 relative to the segment 204. The control unit 203 may activate the braking mode based on a variety of conditions. For instance, the control unit 203 may activate the braking mode when the manual rotation causes the segment 206 to be within a defined angular range (e.g., for θ₂₀₆ from -15 to 15 degrees). The braking may simulate barriers that resist or prevent relative rotation of the segments.

In an embodiment, a handheld controller may comprise a first segment, a second segment, and one or more additional segments that are each rotatably attached to an adjacent segment of the handheld controller. For instance, FIG. 6 illustrates a handheld controller 500 that comprises a first segment 504, a second segment 506, and additional segments 507 and 509. Similarly, FIG. 7 illustrates a handheld controller 600 that includes a first segment 604, a second segment 606, and additional segments 607 and 609. In an embodiment, the additional segments 507 and 509 (or 607 and 609) may have the same size (e.g., same radius R and same thickness T). In an embodiment, the additional segments 507 and 509 (or 607 and 609) may have different sizes. In an embodiment, there are 4 segments that correspond to four fingers.

In an embodiment, the handheld controller 500/600 may comprise a control unit (e.g., control unit 203) that is configured to cause relative rotation between the first segment (e.g., 504 or 604) and at least one segment of the second segment and the one or more additional segments (i.e., at least one segment of segments 506, 507, 509 or segments 606, 607, 609). In this embodiment, the control unit may be configured to determine which segment(s) of the second segment (506 or 606) and one or more additional segments (507, 509 or 607, 609) to rotate in order to control a percentage of the controller 500/600 that is rotating relative to the first segment 504/604 (and relative to a user, if the user is holding the first segment 504/604).

For instance, the first segment 504/604 may occupy half (i.e., 50%) of the side surface area of the handheld controller 500/600, while the second segment (506 or 606) and the one or more additional segments (507, 509 or 607, 609) each occupies 1/6 of the side surface area of the handheld controller 500/600, where the side surface area of each segment may be calculated as A = 2 x Radius of Segment x π x Thickness of Segment. If the control unit has made a determination that half (i.e., 50%) of the side surface area of the handheld controller 500/600 is to rotate in unison (e.g., in the same direction and at the same rate) relative to the first segment 504/604, the control unit may cause each segment of segments 506, 507, 509 or segments 606, 607, 609 to rotate in unison relative to the first segment 504/604. In another instance, if the control unit has made a determination that 2/6 (about 33%) of the side surface area of the handheld controller 500/600 is to rotate in unison relative to the first segment 504/604, the control unit may cause only two segments of segments 506, 507, 509 (or of segments 606, 607, 609) to rotate in unison relative to the first segment 504/604. The other segment 509/609 may be sufficiently uncoupled from an adjacent rotating segment 507/607 so as to substantially not rotate relative to the first segment 504/604. Similarly, if the control unit has made a determination that 1/6 (about 16%) of the side surface area of the handheld controller 500/600 is to rotate relative to the first segment 504/604, the control unit may cause only one segment of segments 506, 507, 509 (or of segments 606, 607, 609) to rotate relative to the first segment 504/604. The other segments 507, 509 (or segments 607, 609) may be substantially uncoupled from an adjacent rotating segment 506/606 so as to substantially not rotate relative to the first segment 504/604.

In an embodiment, the control unit may determine a percentage of the total side surface area of the handheld controller to rotate in unison, or more specifically how many segments of the handheld controller to rotate in unison, based on an intensity level associated with a haptic effect or with an event triggering the haptic effect. A lower intensity level may be associated with a smaller percentage or fewer segments to rotate in unison, while a larger intensity level may be associated with a higher percentage and more segments to rotate in unison.

In an embodiment, the control unit may determine a percentage of the total side surface area of the handheld controller to rotate in unison, or more specifically how many segments of the handheld controller to rotate in unison, based on a texture associated with the haptic effect or with a virtual object represented by the haptic effect. For instance, a smoother texture may be associated with a smaller percentage or fewer segments to rotate in unison, while a rougher texture may be associated with a larger percentage or more segments to rotate in unison. In this embodiment, a texture profile (e.g., in storage device 240) may associate a smoother texture with a smaller percentage or fewer segments to rotate in unison, and associate a rougher texture with a larger percentage or more segments to rotate in unison. This embodiment may thus simulate a texture by varying how many segments of a handheld controller are rotated in unison. As discussed below, a texture may also or alternatively be simulated by an individual segment based on how the segment rotates.

In an embodiment, the control unit may determine a percentage of the total side surface area of the handheld controller to rotate in unison, or more specifically how many segments of the handheld controller to rotate in unison, based on how much contact a user's hand has with a virtual object in a virtual environment (e.g., a virtual waterfall in a VR game application). For instance, if the user's entire hand is in contact with the virtual object in the virtual environment, all of segments 506, 507, and 509 may be rotated in unison relative to segment 504. If only 2/3 of the user's hand is in contact with the virtual object in the virtual environment, then only two segments 506, 507 are rotated in unison relative to segment 504.

While the above passages relate to a control unit of the handheld controller 500/600 that causes segments thereof to rotate in unison relative to a first segment, the control unit may also be able to cause segments to rotate non-uniformly, in terms of direction and/or rate and/or degree of rotation, relative to the first segment. For instance, a control unit for the handheld controller 500 in FIG. 6 may be configured to cause the second segment 506 to rotate in a first direction relative to segment 504, cause segment 507 to rotate in the first direction twice as quickly as segment 506, and cause segment 509 to rotate in a second and opposite direction relative to segment 504.

In an embodiment, a segment may simulate a texture based on how the segment rotates. For instance, a texture profile in a storage device may associate a rougher texture for a segment's surface with a rotation of the segment that is punctuated by many pauses (e.g., a rotation in a start-and-stop manner). The texture profile may further associate a smoother texture for a segment's surface with a rotation of the segment that has fewer or no pauses or other interruptions. In an embodiment, a segment (e.g., segment 204 of FIG. 2A) may be associated in a storage device with a particular texture (e.g., a smooth texture), and the control unit may be configured to rotate the segment (e.g., relative to another segment, such as segment 206) based on the texture. In an embodiment, the segment may be associated with two or more textures. For instance, the segment may be associated with a virtual object (e.g., a ratchet or cheese grater) that has a first texture when felt from one direction, and a second texture when felt from a second and different direction. In this embodiment, the first texture may be associated with a first direction of rotation, and the second texture may be associated with a second and opposite direction of rotation. Bidirectional control may be provided through the control unit, which may determine whether to rotate the segment (relative to, e.g., another segment) in the first direction or the second direction. This determination may be based on, e.g., which texture the control unit is attempting to simulate. Simulating a rough texture may involve rotating the segment in the first direction, and simulating the smooth texture may involve rotating the segment in the second direction. The control unit may then rotate the segment relative to another segment based on the respective texture associated with the determined direction. For instance, the control unit may rotate a first segment relative to a second segment in a manner that involves many pauses if the rotation is in the first direction, and may rotate the first segment in a smoother manner if the rotation is in the second direction.

FIG. 6 illustrates an embodiment in which each segment of a first segment 504, a second segment 506, and additional segments 507, 509 has an actuator disposed therein so as to be able to individually control rotation of the segments. More specifically, in FIG. 6 actuators 514, 516, 517, and 519 may be disposed within segments 504, 506, 507, and 509, respectively, and may be configured to rotate their respective segments about a rotational axis 510. Segment 509 may be rotatably attached to an adjacent segment (i.e., segment 507), while segment 507 may be rotatably attached to an adjacent segment (e.g., segment 506), and segment 506 may be rotatably attached to an adjacent segment (e.g., segment 504). A plurality of shafts may each extend between a pair of adjacent segments, and may extend along the rotational axis 510. As depicted in FIG. 6, a first shaft 508 may extend between segments 504 and 506, a second shaft 518 may extend between segments 506 and 507, and a third shaft 528 may extend between segments 507 and 509.

In an embodiment, as illustrated in FIG. 6, actuator 514 may be fixedly attached to segment 504 and rotatably attached to first shaft 508, so as to be able to rotate the segment 504 relative to the first shaft 508. Actuator 516 may be fixedly attached to the segment 506 and rotatably attached to the first shaft 508, so as to be able to rotate the segment 506 relative to the first shaft 508. Both the actuator 514 and the actuator 516 may be rotatably attached to opposite ends of the first shaft 508, so as to be able to rotate about the shaft. The two actuators 514, 516 may be used to rotate their respective segments in opposite directions about the first shaft 508.

In an embodiment, as illustrated in FIG. 6, the actuator 517 may be rotatably attached to the shaft 518 and fixedly attached to segment 507, so as to be able to rotate the segment 507 about the shaft 518. The actuator 519 may be rotatably attached to the shaft 528 and fixedly attached to a body of the segment 509, so as to be able to rotate the segment 509 about the shaft 528. The control unit of the handheld controller 500 may be configured to select which actuator(s) of the actuators 516, 517, 519 to activate, and activate the selected actuator(s) individually in order to control which segment(s) of segments 506, 507, and 509 rotate relative to the first segment 504.

While FIG. 6 illustrates a handheld controller 500 having multiple actuators for outputting a rotational haptic effect, FIG. 7 illustrates a handheld controller 600 that has only a single actuator whose rotational output may be selectively transmitted to various segments to output a rotational haptic effect. In FIG. 7, the handheld controller 600 may have a single actuator 614 to rotate one or more of the second segment 606 and one or more additional segments 607, 609 relative to the first segment 604. More specifically, the actuator 614 may output rotation to a shaft 608 that extends to the second segment 606. The shaft 608 may be fixedly attached to the second segment 606, so that rotation being output by the actuator 614 causes the second segment 606 to rotate relative to the first segment 604. Thus, the actuator 614, when activated, may actuate at least the second segment 606 relative to the first segment 604.

In an embodiment, with reference to FIG. 7, a control unit of the handheld controller 600 may selectively rotationally couple an additional segment 607 to segment 606, or selectively rotationally couple both additional segments 607, 609 to segment 606. The control unit thus controls which segment(s) of the additional segments 607, 609 rotate relative to segments 604 and 606. In an embodiment, the handheld controller 600 may comprise a plurality of coupling devices that are each disposed between a respective pair of adjacent segments to rotationally couple the pair of segments. In an embodiment, each of the coupling devices may be a clutch disposed between a pair of adjacent segments, and may, upon receiving a signal from the control unit, engage the pair of adjacent segments to rotationally couple the segments. As depicted in FIG. 7, a coupling device 616 may be disposed between segments 606 and 607. The control unit may control the coupling device 616 to control whether the segment 607 rotates with the segment 606. Further, a coupling device 617 may be disposed between segments 607 and 609. The control unit may control the coupling device 617 to control whether the segment 609 also rotates with segments 606 and 607. Thus, the control unit may control the coupling devices 616, 617 to control how many segments rotate relative to the first segment 604.

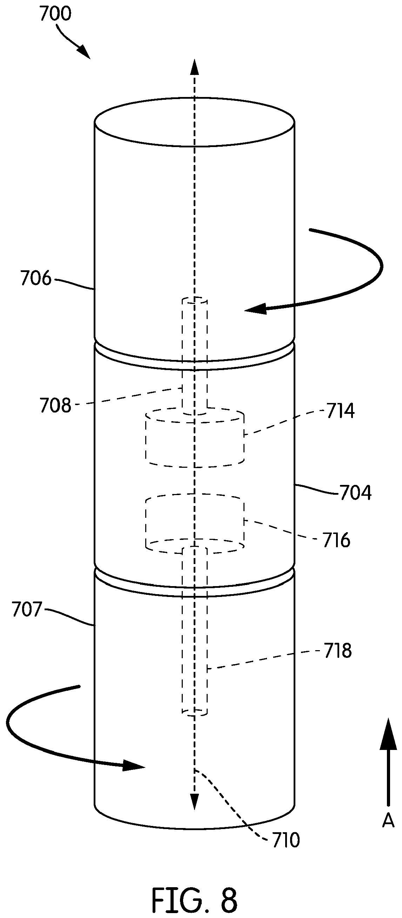

FIG. 8 illustrates an embodiment of a handheld controller 700 having two actuators, i.e. a first actuator 714 and a second actuator 716, disposed within a segment 704. The two actuators 714, 716 may be configured to generate relative rotation between a second segment 706 and a third segment 707. More specifically, the first actuator 714 may rotate the second segment 706 relative to the first segment 704 via a shaft 708, while the second actuator 716 may rotate the third segment 707 relative to the first segment 704 via the shaft 718. The shaft 708 may be fixedly attached to the second segment 706, so that rotation output by the actuator 714 rotates the second segment 706. Similarly, the shaft 718 may be fixedly attached to the third segment 707, so that the rotation output by the actuator 716 rotates the third segment 707. In an embodiment, a user grasping the handheld controller 700 may grasp the first segment 704 and portions of the second segment 706 and the third segment 707. In this embodiment, the first segment 704 may be considered to be a stationary segment relative to the user, while the second segment 706 and the third segment 707 are the rotating segments. A rotational haptic effect may be output by rotating the second segment 706 in a first direction (e.g., counterclockwise) relative to the user and to the first segment 704 as measured from a direction A, and by rotating the third segment 707 in a second and opposite direction (e.g., clockwise) relative to the user and to the first segment 704 from as measured from direction A.

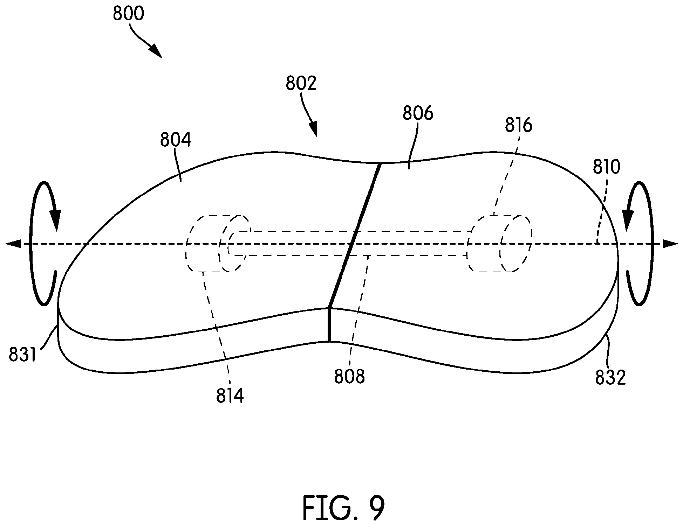

FIG. 9 illustrates a handheld gamepad controller 800 intended for two-handed use. A user's left hand may grasp a left end 831 of the controller 800, while the user's right hand may grasp a right end 832 of the controller 800. In an embodiment, the gamepad controller 800 may have a first segment 804 and a second segment 806 that are rotatable relative to each other. In an embodiment, the rotation may be generated through a first actuator 814 located within the first segment 804 and through a second actuator 816 located within the second segment 816. The first actuator 814 may be fixedly attached to the first segment 804, and rotatably attached to a shaft 808 that extends from the first segment 804 to the second segment 806, so as to be configured to rotate the first segment 804 relative to the shaft 808. Similarly, the actuator 816 may be fixedly attached to the segment 806 and rotatably attached to the shaft 808, so as to be configured to rotate the second segment 806 relative to the shaft 808. The handheld controller 800 may comprise a control unit that is configured to activate one of the actuators 814, 816, or to activate both of the actuators 814, 816 in opposite directions about the shaft 808 to output a rotational haptic effect.

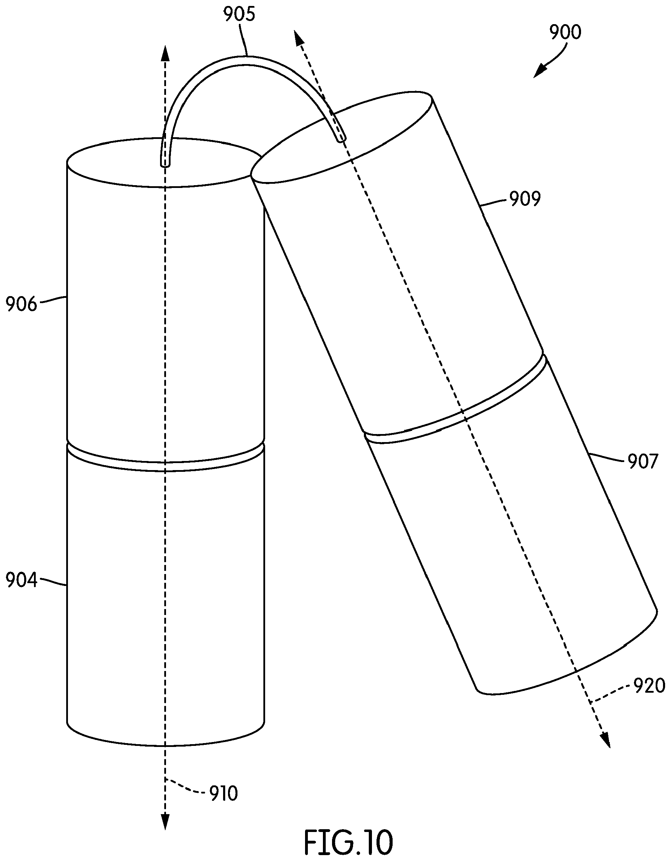

FIG. 10 illustrates a handheld controller 900 which may have multiple (e.g., two) different axes of rotation. The handheld controller 900 may mimic, e.g., a nunchaku, and may comprise a first pair of segments 904, 906 that may exhibit relative rotation about a first rotational axis 910, and comprise a second pair of segments 907, 909 that may exhibit relative rotation about a second rotational axis 920. In an embodiment, the first pair of segments 904, 906 and the second pair of segments 907, 909 may be attached by a cord 905. In an embodiment, the first rotational axis 910 and the second rotational axis 920 may be parallel. In an embodiment, the two rotational axes 910, 920 may be oblique.

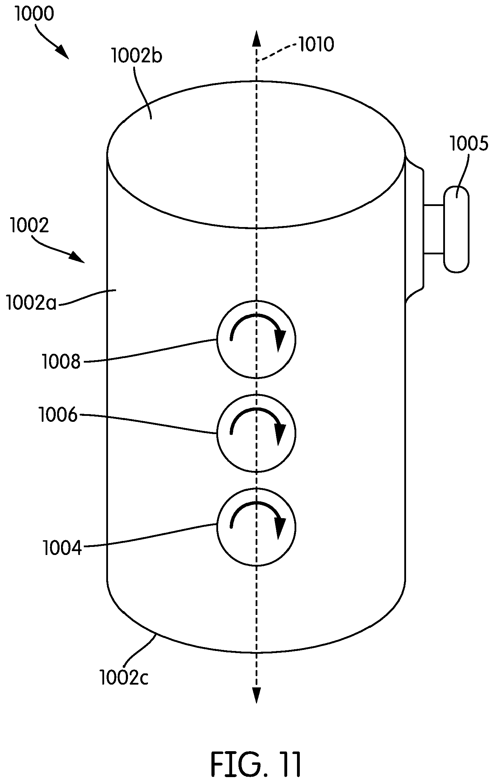

FIGS. 11-13 illustrate additional embodiments in which a segment may comprise one or more haptic effect regions (e.g., a single haptic effect region) disposed on a surface thereof, wherein each of the one or more haptic effect region is rotatable relative to a remaining portion of the surface to apply stress to a user's skin in a localized fashion. More specifically, FIG. 11 illustrates a handheld controller 1000 that is configured to output a rotational haptic effect by rotating a plurality of haptic effect regions 1004, 1006, 1008. In an embodiment, the handheld controller 1000 has a housing 1002 with a side surface 1002a, a top surface 1002b, and a bottom surface 1002c. In this embodiment, the haptic effect regions 1004, 1006, and 1008 may be disposed on the side surface 1002a of the housing 1002, and rotatable relative to a remaining portion of the side surface 1002a. In an embodiment, the side surface 1002a may be a surface that is intended to be grasped by a user during use of the handheld controller 1000. The side surface 1002a may further be a surface that is substantially parallel to (and does not intersect) a longitudinally-extending central axis 1010 of the controller 1000. In an embodiment, one or more user input elements, such as a joystick 1005, may be disposed on a surface (e.g., side surface 1002a) of the controller 1000. The haptic effect regions 1004, 1006, 1008 may each be a circular region, or may have any other shape.

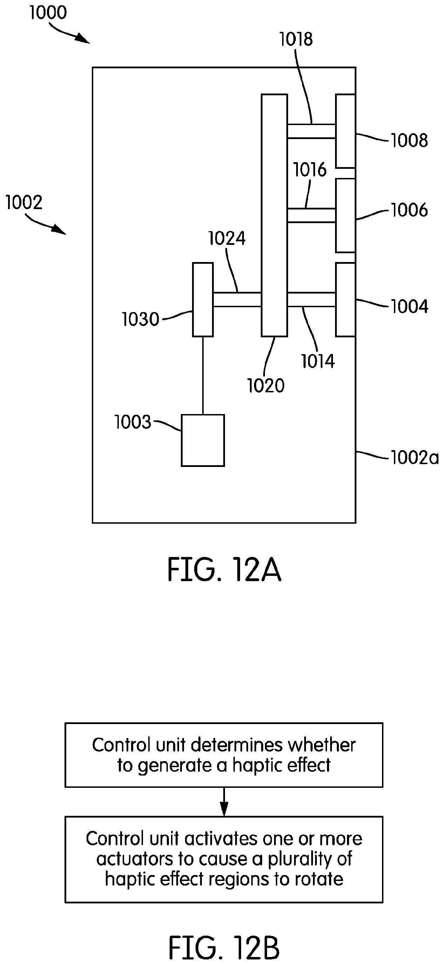

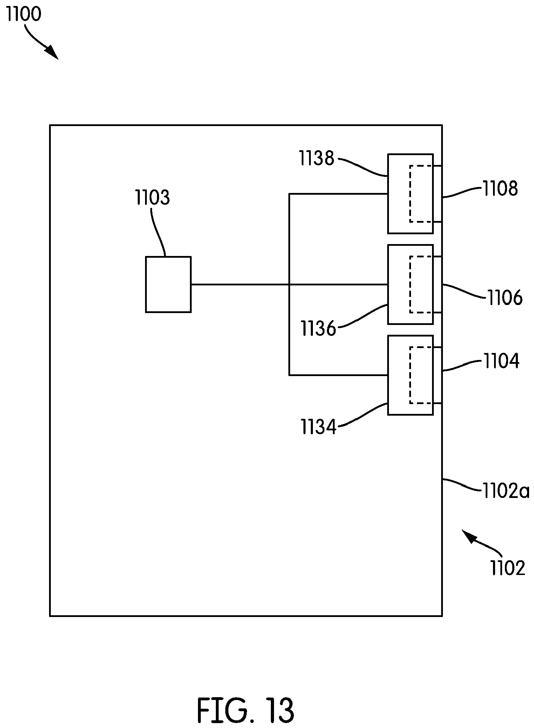

In an embodiment, the handheld controller 1000 may comprise one or more actuators (e.g., a single actuator) disposed within the housing 1002 and configured to rotate a plurality of haptic effect regions 1004, 1006, 1008 relative to a remaining portion of the side surface 1002a. The one or more actuators are illustrated in FIGS. 12A and 13. FIG. 12A illustrates a block diagram that includes an actuator 1030 and the plurality of haptic effect regions 1004, 1006, 1008. The plurality of haptic effect regions 1004, 1006, and 1008 may share a single actuator 1030. In an embodiment, the actuator 1030 may be configured to output torque to a shaft 1024, which may be connected to a transmission component 1020, such as a gearbox. The transmission component 1020 may in turn transfer the output torque from the shaft 1024 to the haptic effect regions 1004, 1006, 1008 via respective shafts 1014, 1016, and 1018, respectively. In an embodiment, the actuator 1030 may be controlled by a control unit 1003 in signal communication with the actuator 1030. The control unit 1003 may be configured to determine whether to generate a haptic effect and, in response to such a determination, activate the actuator 1030 to cause the plurality of haptic effect regions 1004, 1006, and 1008 to rotate, as illustrated in FIG. 12B. In an embodiment, the control unit 1003 may be configured to cause the plurality of haptic effect regions 1004, 1006, 1008 to rotate in the same direction, at the same rate, and by the same degree of rotation (i.e., in unison). In an embodiment, the degree of rotation may be determined by the control unit 1003, and may have a range from a few degrees (e.g., 10 degrees) to multiple cycles (e.g., 2 cycles = 720 degrees).

FIG. 13 illustrates an embodiment in which a handheld controller 1100 may have multiple actuators 1134, 1136, 1138 to actuate respective haptic effect regions 1104, 1106, 1108. The handheld controller 1100 may have a housing 1102, which may have a side surface 1102a on which the haptic effect regions 1104, 1106, 1108 are disposed. In an embodiment, each of the multiple actuators 1134, 1136, and 1138 may drive the respective haptic effect regions 1104, 1106, and 1108 via magnetic coupling. For instance, each of the multiple actuators 1134, 1136, and 1138 may be a stator of a respective motor, while the respective haptic effect regions 1104, 1106, and 1108 may be a respective rotor of the respective motor. In an embodiment, the actuators 1134, 1136, 1138 may be individually controlled by a control unit 1103. The control unit 1103 may, for instance, cause the haptic effect regions 1104, 1106, 1108 to rotate at different times, rotate in different directions, rotate with different rates, and/or rotate by different degrees of rotation. Alternatively, the control unit 1103 may cause the haptic effect regions 1104, 1106, and 1108 to rotate in unison.

In an embodiment, a haptic effect region may be coplanar with a remaining portion of the side surface of a housing of a handheld controller. That is, the outer surface of the haptic effect region (e.g., 1008) and the remaining portion of the side surface (e.g., 1002a) may be coplanar, as illustrated in FIGS. 12A and 13. In another embodiment, a haptic effect region may be recessed relative to a remaining portion of the side surface, or may protrude past the remaining portion of the side surface. In an embodiment, a handled controller may have at least three haptic effect regions that arranged in a co-linear manner on its side surface, as illustrated in FIG. 11. In another embodiment, a handheld controller may have fewer or more haptic effect regions. The haptic effect regions may be arranged in a line, in a 2D array, or in any other pattern.

While various embodiments described above discuss a handheld controller configured to output a rotational haptic effect, other embodiments may involve a wearable peripheral device configured to output a rotational haptic effect. For example, the haptic effect regions of FIGS. 11-13 may be disposed on an inward-facing side surface of a head-mounted device used for a virtual reality (VR) gaming application. The haptic effect regions may be configured to output a rotational haptic effect that can be sensed at the head of a user wearing the head-mounted device.

While various embodiments described above involve a handheld controller or other peripheral device that outputs a rotational haptic effect, the handheld controller or other peripheral device may be configured to additionally output other types of haptic effect(s), such as a vibrotactile haptic effect, an electrostatic friction haptic effect, a kinesthetic haptic effect (e.g., at a trigger, if any, of the handheld controller), a deformation haptic effect, or other type of haptic effect.

While various embodiments have been described above, it should be understood that they have been presented only as illustrations and examples of the present invention, and not by way of limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. All patents and publications discussed herein are incorporated by reference herein in their entirety.

## Claims

1. A handheld controller comprising:
a first segment;
a second segment rotatably attached to the first segment;
a user input component disposed on the first segment or the second segment;
an actuator located within the first segment or the second segment, the actuator being configured to generate relative rotation between the first segment and the second segment about a rotational axis; and
a control unit in communication with the actuator and configured
to determine whether to generate a haptic effect, and, in response to a determination to generate the haptic effect, to activate the actuator to generate the relative rotation between the first segment and the second segment about the rotational axis.

2. The handheld controller of claim 1, wherein at least a portion of the first segment and at least a portion of the second segment are aligned along the rotational axis of the actuator, wherein the control unit is configured, in response to a determination to generate the haptic effect, to determine a degree of relative rotation between the first segment and the second segment, and to activate the actuator to cause the first segment and the second segment to rotate relative to each other by the determined degree of relative rotation, wherein the determined degree of relative rotation is a maximum amount of relative rotation between the first segment and the second segment.

3. The handheld controller of claim 2, wherein the control unit is configured to cause a segment of the first segment and the second segment to rotate in a first direction only once relative to the other of the first segment and the second segment in response to the determination to generate the haptic effect;
or
wherein the control unit is configured to cause a segment of the first segment and the second segment to rotate in a first direction only once relative to the other of the first segment and the second segment in response to the determination to generate the haptic effect and wherein the segment is rotated from a first position to a second position when the actuator is activated, and wherein the actuator is configured to return the segment from the second position to the first position by causing the segment to rotate in a second and opposite direction relative to the other of the first segment and the second segment by the determined degree of relative rotation.

4. The handheld controller of claim 2, wherein the control unit is configured to determine the degree of relative rotation based on at least one of: i) a grip pressure on the first segment or the second segment, ii) a material forming an exterior surface of the first segment or the second segment, and iii) a total number of segments of the handheld controller that are rotatable relative to each other.

5. The handheld controller of claim 2, wherein, in response to the determination to generate the haptic effect, the control unit is further configured to determine a frequency of oscillation, and to cause the first segment and the second segment to rotate back and forth relative to each other at an amplitude that is the determined degree of relative rotation and at a frequency that is the determined frequency of oscillation.

6. The handheld controller of claim 1, further comprising:
a shaft longitudinally extending along the rotational axis of the actuator, and from the first segment to the second segment, wherein the actuator is rotatably attached to the shaft such that the actuator is rotatable relative to the shaft, or is fixedly attached to the shaft such that the actuator and the shaft rotate together, wherein the rotational axis is a longitudinally-extending central axis of the handheld controller.

7. The handheld controller of claim 6, wherein the actuator is a first actuator rotatably attached to the shaft and located within the first segment, the handheld controller further comprising a second actuator located within the second segment and rotatably attached to the shaft, and wherein the control unit, in response to the determination to generate the haptic effect, is configured to cause the first actuator to rotate the first segment in a first direction about the shaft, and to cause the second actuator to rotate the second segment in a second and opposite direction about the shaft.

8. The handheld controller of claim 7, wherein the handheld controller further comprises one or more additional segments that are each rotatably attached to an adjacent segment, and wherein the control unit is configured to determine which of the first, second, and one or more additional segments of the handheld controller to rotate relative to the first segment.

9. The handheld controller of claim 8, wherein each segment of the one or more additional segments of the handheld controller has an actuator disposed therein, and wherein each actuator is configured to rotate the respective segment about the longitudinally-extending central axis.

10. The handheld controller of claim 6, wherein the handheld controller further comprises one or more additional segments and one or more coupling devices, wherein each of the one or more coupling devices is configured, upon receiving a control signal from the control unit, to engage a respective pair of adjacent segments of the first, second and one or more additional segments such that the pair of adjacent segments rotate together.

11. The handheld controller of claim 1, wherein:
the second segment is disposed at a first end of the first segment, the handheld controller further comprising a third segment disposed at a second and opposite end of the first segment,
the actuator is a first actuator disposed within the first segment and is configured to rotate the second segment via a first shaft in a first direction about the central axis and relative to the first segment, and
the handheld controller comprises a second actuator disposed in the first segment and configured to rotate the third segment via a second shaft in a second and opposite direction about the central axis and relative to the first segment.

12. The handheld controller of claim 1, further comprising a rotation sensor configured to detect relative rotation between the first segment and the second segment, wherein the control unit is configured to convert the detected relative rotation to a control input signal, wherein the handheld controller further comprises a communication unit that is configured to communicate the control input signal to a computer external to the handheld controller.

13. The handheld controller of claim 1, wherein the handheld controller is configured to communicate with a computer, and wherein the control unit of the handheld controller is configured to determine whether the computer is executing a defined application or a defined portion thereof, and is further configured to activate the actuator to cause the user input component to rotate to a defined position in response to a determination that the computer is executing the defined application or the defined portion thereof.

14. The handheld controller of claim 13, wherein the defined application is a game application, and the user input component is a button or a trigger configured to provide input signals for the game application.

15. The handheld controller of claim 1, wherein the first segment is associated in a storage device with a texture, and the control unit is configured to rotate the first segment relative to the second segment based on the texture
or
wherein the first segment is associated in a storage device with a first texture and a second texture, the first texture being associated with a first direction of rotation, the second texture being associated with a second and opposite direction of rotation, and wherein the control unit is configured to determine whether to rotate the first segment relative to the second segment in the first direction or the second direction, and to rotate the first segment relative to the second segment based on the respective texture associated with the direction that is determined.

16. The handheld controller of claim 1, wherein the actuator is configured to have a mode in which the actuator resists relative rotation between the first segment and the second segment.

17. A handheld controller comprising:
a housing having a side surface that is a graspable surface;
a user input component disposed on the housing;
one or more haptic effect regions disposed on the side surface of the housing and rotatable relative to a remaining portion of the side surface;
one or more actuators disposed within the housing and configured to rotate the one or more haptic effect regions relative to the remaining portion of the side surface;
a control unit in communication with the one or more actuators and configured
to determine whether to generate a haptic effect, and, in response to a determination to generate the haptic effect, to activate the one or more actuators to cause the one or more haptic effect regions to rotate.

18. The handheld controller of claim 17, wherein each haptic effect region of the one or more haptic effect regions is a circular region;
or
wherein each haptic effect region of the one or more haptic effect regions is a circular region and wherein the one or more haptic effect regions has a plurality of haptic effect regions, and wherein the one or more actuators has only a single actuator, and wherein the single actuator is configured to rotate the plurality of haptic effect regions;
or
wherein each haptic effect region of the one or more haptic effect regions is a circular region and wherein the one or more haptic effect regions has a plurality of haptic effect regions, and wherein the one or more actuators has only a single actuator, and wherein the single actuator is configured to rotate the plurality of haptic effect regions and wherein each haptic effect region of the plurality of haptic effect regions is coplanar with a remaining portion of the side surface;
or
wherein each haptic effect region of the one or more haptic effect regions is a circular region and wherein the one or more haptic effect regions has a plurality of haptic effect regions, and wherein the one or more actuators has only a single actuator, and wherein the single actuator is configured to rotate the plurality of haptic effect regions and wherein each haptic effect region of the plurality of haptic effect regions is coplanar with a remaining portion of the side surface and wherein the control unit is configured to cause the plurality of haptic effect regions to rotate at a same rate, in a same direction, and by a same degree of rotation;
or
wherein each haptic effect region of the one or more haptic effect regions is a circular region and wherein the one or more haptic effect regions has a plurality of haptic effect regions, and wherein the one or more actuators has only a single actuator, and wherein the single actuator is configured to rotate the plurality of haptic effect regions and wherein each haptic effect region of the plurality of haptic effect regions is coplanar with a remaining portion of the side surface and wherein the control unit is configured to cause the plurality of haptic effect regions to rotate at a same rate, in a same direction, and by a same degree of rotation and wherein the plurality of haptic effect regions comprises at least three haptic effect regions that are co-linear.
